## Europäisches Patentamt
## European Patent Office
## Office européen des brevets

(11) Numéro de publication: **0 039 049**
**B1**

(12) # FASCICULE DE BREVET EUROPEEN

(45) Date de publication du fascicule du brevet:
06.06.84

(51) Int. Cl.³: **H 02 K 1/20**

(21) Numéro de dépôt: 81103061.8

(22) Date de dépôt: 23.04.81

(54) Distanceur d'évent statorique pour machine dynamoélectrique de puissance.

(30) Priorité: 30.04.80 FR 8009763

(43) Date de publication de la demande:
04.11.81 Bulletin 81/44

(45) Mention de la délivrance du brevet:
06.06.84 Bulletin 84/23

(84) Etats contractants désignés:
**BE DE FR GB IT**

(56) Documents cités:
**BE - A - 669 485**
**CH - A - 162 251**
**DE - C - 103 236**
**DE - C - 539 161**
**GB - A - 5 234**
**GB - A - 1 029 507**
**US - A - 1 476 986**
**US - A - 3 439 202**

(73) Titulaire: **ALSTHOM-ATLANTIQUE Société anonyme dite:, 38, Avenue Kléber, F-75784 Paris Cedex 16 (FR)**

(72) Inventeur: **Gillet, Roger, 24, avenue d'Altkirch, F-90000 Belfort (FR)**

(74) Mandataire: **Weinmiller, Jürgen et al, Zeppelinstrasse 63, D-8000 München 80 (DE)**

BUNDESDRUCKEREI BERLIN

## Description

L'invention concerne un distanceur d'évent statorique pour machine dynamoélectrique de puissance.

Le circuit magnétique statorique d'un alternateur de puissance est souvent constitué par un empilement selon l'axe du rotor de tôles magnétiques serrées à l'aide de tirants parallèles à cet axe.

Cet empilement est l'objet de »pertes« c'est-à-dire d'un dégagement de chaleur sous l'action des inductions magnétiques variables. Le refroidissement de ce circuit est assuré par des »évents« c'est-à-dire des intervalles qui sont ménagés entre les tôles de l'empilement et dans lesquels circule radialement un gaz de refroidissement. Ces intervalles sont maintenus grâce à des distanceurs d'évents en forme de baguettes qui s'étendent radialement et sont serrées entre deux tôles de l'empilement. Ces baguettes doivent être fixées sur une tôle de support de manière à permettre le montage de l'empilement sans risque de déplacement des baguettes.

Selon une solution connue les distanceurs d'évents sont métalliques et soudés électriquement par résistance sur une tôle support en acier doux d'épaisseur 0,6 mm interposée dans l'empilage statorique, la tôle magnétique utilisée pour le circuit magnétique n'étant pas adaptée au soudage. Une fois les distanceurs soudés, on procède à un ébavurage des points de soudure et l'ensemble est protégé par peinture. Cette solution présente l'inconvénient que la tôle de support et les distanceurs métalliques (en général amagnétique), sont le siège de pertes non négligeables, ce qui diminue le rendement de la machine.

On pourrait éviter cette opération de soudure en suivant l'enseignement du document GB-A-5 234 (AD 1914), qui propose de découper des dents dans une tôle magnétique et de replier ces dents sur une partie de l'entretoise en vue de l'emprisonner. Or, cela constitue une opération délicate de montage, surtout si les entretoises ont une grande longueur et si plusieurs dents doivent s'engager simultanément dans des fentes d'une entretoise.

La présente invention a pour but la réalisation d'un distanceur d'évent statorique pour machine dynamoélectrique de puissance permettant d'obtenir de manière simple de diminuer fortement les pertes.

Elle a pour objet un distanceur d'évent statorique pour machine dynamoélectrique de puissance dont le circuit magnétique statorique est constitué par un empilement axial de tôles magnétiques, cet empilement étant maintenu serré et étant refroidi par circulation d'un fluide dans des »évents« formés chacun par un intervalle maintenu par un »distanceur« entre deux tôles de l'empilement,

— ledit distanceur comportant une tôle de support apte à être incorporée dans l'empilement axial de tôles magnétiques, pour y constituer un bord de l'évent, cette tôle comportant une face »interne« du côté de l'évent, et une face externe opposée, cette tôle de support étant une tôle de même qualité magnétique et de même épaisseur que celles du circuit magnétique et portant des dents de fixation en saillie sur ladite face interne,

— et des entretoises fixées sur la face interne de la tôle de support à l'aide desdites dents de manière à maintenir l'intervalle formant évent entre cette face et la tôle magnétique en regard, de l'autre côté de l'éfent,

caractérisé par le fait que lesdites entretoises sont des baguettes flexibles constituées d'un matériau isolant, lesdites dents de fixation constituant des butées latérales au nombre de trois au moins pour chaque baguette, ces butées étant disposées alternativement sur les deux flancs latéraux de la baguette correspondante et hors d'alignement, de manière à appliquer à la baguette une flexion élastique permanente engendrant, au contact de chacune des butées, une pression latérale suffisante pour maintenir la baguette en place par frottement contre ces butées.

Il est à noter que le document DE-C-539 161 décrit déjà des entretoises en matière isolante sans toutefois expliquer comment de telles entretoises peuvent être fixées sur les tôles magnétique.

L'invention présente les avantages suivants:

Il n'est pas nécessaire de placer des dents dans des fentes d'une entretoise et de les replier.

N'obligeant plus à souder les distanceurs, elle permet d'utiliser des tôles de support identiques à celles du circuit magnétique, donc à faibles pertes (de plus, un seul approvisionnement est nécessaire).

Les butées de fixation sont formées sur la tôle protégée et isolée, d'où suppression des postes d'ébavurage et de peinture des tôles de support.

Les distanceurs étant en matière isolante ne sont le siège d'aucune perte, ce qui, avec la meilleure qualité magnétique des tôles de support, conduit à un rendement énergétique amélioré de la machine.

A l'aide des figures schématiques ci-jointes, on va décrire ci-après à titre non limitatif, comment l'invention peut être mise en oeuvre. Lorsqu'un même élément est représenté sur plusieurs figures il y est désigné par le même signe de référence.

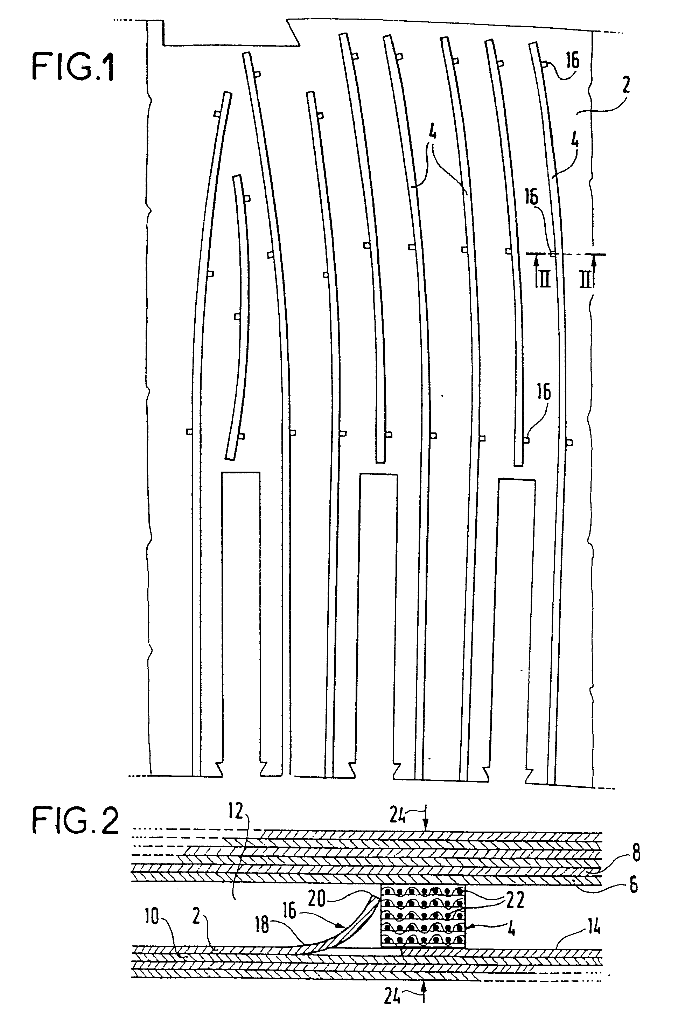

La fig. 1 représente un vue de face d'un distanceur selon l'invention, le plan de la figure étant perpendiculaire à l'axe d'un alternateur.

La fig. 2 représente une vue en coupe à échelle agrandie de ce distanceur, le plan de coupe étant parallèle à l'axe de l'alternateur.

Le distanceur est classiquement constitué à l'aide de baguettes 4 à section rectangulaire serrées entre deux tôles 2, 6 en forme de secteurs de couronnes faisant partie de l'empilement constituant le circuit magnétique du stator d'un alternateur. Ces baguettes sont disposées sensiblement radialement, de manière à maintenir entre ces tôles des intervalles 12 (évents) permettant la circulation radiale d'un gaz de refroidissement.

Chaque baguette est isolante et fixée sur l'une de ces deux tôles magnétiques (»tôle de support«) par l'intermédiaire de moyens de fixation convenables de manière à permettre le montage de l'empilement sans déplacement des baguettes.

Elle est constituée d'un stratifié tissu de verrerésine (époxy), les nappes de tissu 22 étant disposées dans des plans perpendiculaires à la direction 24 de compression de l'empilement (la direction »longitudinale«, c'est-à-dire celle de l'axe de l'alternateur). Une telle constitution lui permet de résister à la forte compression qu'elle doit subir, et qui faisait classiquement choisir un matériau métallique.

Les moyens de fixation sont constitués par des butées latérales 16 obtenues par déformations localisées de la tôle de support 2.

Ces butées sont obtenues par emboutissagedécoupage de cette tôle de support 2 pour former des languettes 16 par exemple rectangulaires incurvées, dont la base 18 reste attachée et se raccorde à cette tôle, et dont la tête 20 (côté ou sommet opposé à la base) forme saillie au-dessus de la tôle, pour constituer un appui pour un flanc de la baguette 4.

Les baguettes 4 sont flexibles, c'est-à-dire aisément déformables par flexion élastique, et les butées sont au nombre de trois au moins et disposées alternativement sur les deux flancs latéraux de la baguette hors d'alignement de manière à fléchir celle-ci, et à obtenir ainsi, après une mise en place aisée, une force permanente d'appui latéral de la baguette sur chacune des têtes de languettes, le frottement résultant empêchant la baguette de s'échapper.


**Revendications**

1. Distanceur d'évent statorique pour machine dynamoélectrique de puissance dont le circuit magnétique statorique est constitué par empilement axial de tôles magnétiques, cet empilement étant maintenu serré et étant refroidi par circulation d'un fluide dans des »évents« formés chacun par un intervalle (12) maintenu par un distanceur (4) entre deux tôles de l'empilement, ce distanceur comportant

— une tôle de support (2) apte à être incorporée dans l'empilement axial de tôles magnétiques (10, 2, 6, 8), pour y constituer un bord de l'évent, cette tôle comportant une face »interne« (14) du côté de l'évent, et une face externe opposée, cette tôle de support (2) étant une tôle de même qualité magnétique et de même épaisseur que celles du circuit magnétique et portant des dents de fixation (16) en saillie sur ladite face interne (14),

— et des entretoises (4) fixées sur la face interne (14) de la tôle de support (2) à l'aide desdites dents de manière à maintenir l'intervalle formant évent (12) entre cette face et la tôle magnétique en regard, de l'autre côté de l'évent,

caractérisé par le fait que lesdites entretoises sont des baguettes flexibles (4) constituées d'un matériau isolant, lesdites dents de fixation constituant des butées latérales (16) au nombre de trois au moins pour chaque baguette, ces butées (16) étant disposées alternativement sur les deux flancs latéraux de la baguette (4) correspondante et hors d'alignement, de manière à appliquer à la baguette (4) une flexion élastique permanente engendrant, au contact de chacune des butées (16), une pression latérale suffisante pour maintenir la baguette (4) en place par frottement contre ces butées (16).

2. Distanceur selon la revendication 1, caractérisé par le fait que lesdites butées (16) sont constituées par des déformations de la tôle de support (2).

3. Distanceur selon la revendication 2, caractérisé par le fait que lesdites butées (16) sont constituées par des languettes découpées dans la tôle de support (2), ces languettes comportant une base (18) constituée par un côté restant attaché à la tôle de support (2), et une tête (20) opposée à cette base, la languette étant incurvée de manière à mettre sa tête (20) en saillie sur ladite face interne (14).

4. Distanceur selon la revendication 1, caractérisé par le fait que ladite baguette (4) est constituée par un stratifié de tissu de fibres dans une résine polymérisée, des nappes de tissu (22) étant disposées parallèlement à ladite tôle de support (2).


**Patentansprüche**

1. Abstandshalter für Kühlkanäle im Stator einer leistungsstarken dynamoelektrischen Maschine, deren Statormagnetkreis aus Magnetblechen in axialer Stapelung besteht, wobei der Stapel gepreßt gehalten wird und mittels eines in den Kühlkanälen, die je durch den mittels eines Abstandsstücks zwischen zwei Blechen des Stapels aufrechterhaltenen Abstand (12) gebildet werden, umlaufenden Fluids gekühlt werden, wobei der Abstandshalter

— ein Stützblech (2), das geeignet ist, in den axialen Stapel von Magnetblechen (10, 2, 6, 8) eingefügt zu werden, um dort einen Rand des Kühlkanals zu bilden, und das eine »innere« Seite (14) am Kühlkanal sowie dieser gegenüber eine äußere Seite besitzt, wobei dieses Stützblech (2) ein Blech gleicher Magnetqualität und gleicher Dicke wie die Bleche des Magnetkreises ist und Befestigungszähne (16) trägt, die auf der inneren Seite (14) vorstehen,

— und Abstandsstücke (4) aufweist, die an der inneren Seite (14) des Stützblechs mit Hilfe der Zähne befestigt sind, derart, daß sie den den Kühlkanal (12) bildenden Abstand zwischen dieser Seite und dem auf der anderen Seite des Kanals anstehenden Magnetblech aufrechterhalten,

dadurch gekennzeichnet, daß die Abstandsstücke biegsame Stäbe (4) aus Isoliermaterial sind und daß die Befestigungszähne für jeden Stab mindestens drei Seitenanschläge (16) bilden, die abwechselnd an den beiden Seitenflanken des entsprechenden Stabs (4) und außer Flucht anliegen, so daß sie dem Stab (4) eine dauernde Biegung verleihen, die durch Berührung an jedem Anschlag (16) einen seitlichen Druck erzeugt, der ausreicht, um den Stab (4) durch Reibung an diesen Anschlägen festzuhalten.

2. Abstandshalter nach Anspruch 1, dadurch gekennzeichnet, daß die Anschläge (16) durch Verformung des Stützblechs (2) gebildet werden.

3. Abstandshalter nach Anspruch 2, dadurch gekennzeichnet, daß die Anschläge (16) von Zungen gebildet werden, die aus dem Stützblech ausgeschnitten sind und eine Basis (18), die von der am Stützblech (2) anschließenden Seite gebildet wird, und einen Kopf (20) gegenüber der Basis bildet, wobei die Zunge kurvenförmig ausgebildet ist, so daß der Kopf (20) auf der inneren Seite (14) vorsteht.

4. Abstandshalter nach Anspruch 1, dadurch gekennzeichnet, daß der Stab (4) aus geschichteten Faserstoffen besteht, die in einem polymerisierten Harz getränkt sind, wobei die Stofflagen (22) parallel zum Stützblech (2) liegen.

**Claims**

1. A spacer assembly for a stator venting duct of a dynamoelectric power machine having a magnetic stator circuit constituted by an axial stack of magnetic stator sheets, said stack being held clamped and being cooled by circulation of a fluid in venting ducts each formed by an interval (12) which is maintained by a spacer assembly (4) between two sheets of the stack, this spacer assembly comprising:

— a support sheet (2) suitable to be incorporated in the axial stack of magnetic sheets (10, 2, 6, 8) for constituting there one side of the venting duct, this sheet having an »inner« surface (14) on the venting duct side and an outer surface on the opposite side, said support sheet (2) being of the same magnetic quality and the same thickness as the sheets of the magnetic circuit and having fixing teeth (16) which project from the inner surface (14),

— and spacer members (4) attached to the inner surface (14) of the support sheet (2) by means of said teeth so as to maintain the interval which forms a venting duct (12) between said surface and the adjacent magnetic sheet on the other side of the venting duct,

characterized in that the spacer members are flexible rods (4) made of an insulating material, the fixing teeth constituting at least three lateral stops (16) for each rod, these stops (16) being arranged alternately on either side of the corresponding rod (4) and out of line so as to apply a permanent elastic bending stress to the rod which creates through the contact of each stop (16) a lateral pressure high enough to maintain the rod (4) in place by friction against these stops (16).

2. A spacer assembly according to claim 1, characterized in that the said stops (16) are obtained by deformation of the support sheet (2).

3. A spacer assembly according to claim 2, characterized in that said stops (16) are constituted by tongues cut in the material of the support sheet (2), these tongues comprising a base portion constituted by a side remaining attached to the support sheet (2), and a head portion (20) opposed thereto, the tongue being curved so that its head (20) projects away from the inner surface (14).

4. A spacer assembly according to claim 1, characterized in that said rod (4) is constituted by layers of fiber fabric in a polymerized resin, the layers (22) being disposed parallelly to said support sheet (2).

FIG.1

FIG.2